# EUROPEAN PATENT SPECIFICATION

(11) **EP 3 789 961 B1**
(45) Date of publication and mention of the grant of the patent: **14.06.2023**
(21) Application number: 19195356.1
(22) Date of filing: 04.09.2019
(51) Int. Cl.: G06T 7/579, G06T 7/73, G06T 7/246

(54) **SENSOR DEVICE FOR CALCULATING A MOTION OF A CAMERA IN A VEHICLE**
SENSORVORRICHTUNG ZUM BERECHNEN EINER BEWEGUNG EINER KAMERA IN EINEM FAHRZEUG
DISPOSITIF CAPTEUR POUR CALCULER LE MOUVEMENT D'UNE CAMÉRA DANS UN VEHICULE

(43) Date of publication of application: 10.03.2021
(73) Proprietor: Continental Autonomous Mobility Germany GmbH, 85057 Ingolstadt (DE)
(72) Inventor: Silva, Carlos, 90411 Nürnberg (DE); Plaza, Victoria, 90411 Nürnberg (DE)
(74) Representative: Continental Corporation

(56) References cited:
- US-A1- 2016 063 330
- SCARAMUZZA D ET AL: "Appearance-Guided Monocular Omnidirectional Visual Odometry for Outdoor Ground Vehicles", IEEE TRANSACTIONS ON ROBOTICS, IEEE SERVICE CENTER, PISCATAWAY, NJ, US, vol. 24, no. 5, 1 October 2008 (2008-10-01), pages 1015-1026, XP011332760, ISSN: 1552-3098, DOI: 10.1109/TRO.2008.2004490
- DAVIDE SCARAMUZZA ET AL: "Visual Odometry [Tutorial]", IEEE ROBOTICS & AUTOMATION MAGAZINE, IEEE SERVICE CENTER, PISCATAWAY, NJ, US, vol. 18, no. 4, 1 December 2011 (2011-12-01), pages 80-92, XP011387821, ISSN: 1070-9932, DOI: 10.1109/MRA.2011.943233

## Description

The present invention is directed to a sensor device for calculating a motion of a camera in a vehicle, in particular for motion estimation of the vehicle, a computer-implemented method for calculating a motion of a camera in a vehicle, a computer program element and a vehicle comprising a sensor device.

### Background of the invention

Interfering depth properties from image information is formerly an ill-posed problem. An image is a two-dimensional projection but the camera acquires a three-dimensional situation. The 3D to 2D projection is an image representation of the world's properties in space. The 2D to 3D inversion of such a projection is mathematically impossible. This problem is solved by making assumptions or imposing constraints on the 3D scene properties. In motion, the relative scale can be computed by triangulating 3D points in a video. However, the global scale cannot be obtained unless additional information about the 3D structure or the initial transformation is available. A common solution in advanced driver assistance systems (ADAS) is to consider the ground to be plane and defined through extrinsic calibration. This means that we know the scale of any point in this plane.

Scaramuzza D et al. disclose in "Appearance-guided monocular omnidirectional visual odometry for outdoor ground vehicles" disclose a real-time algorithm for computing the ego-motion of a vehicle relative to the road.

US 2016/063330 discloses methods and systems for vision-based computation of ego-motion.

Davide Scaramuzza et al. disclose in "Visual odometry Tutorial" a process of estimating the egomotion of an agent.

ADAS has access to other sources of motion with scales such as speed, wheel thick, inertial measurement unit (IMU) or global positioning system (GPS) . The problem with using scale or motion from other sources is that a feedback loop is created and errors through the system are propagated. To avoid this error propagation, each sensor estimates the motion separately wherein the signals are then fused to generate a global motion. The common approach is to estimate the scale by tracking ground points. The main issue with this approach is that the ground calibration plane changes over time that it may no longer be flat. This means that there may be no points on the ground calibration plane and points are projected wrongly at different heights.

### Summary of the invention

The object of the present invention may be seen in the increase of reliability during the use of a sensor device for calculating a motion of a camera in a vehicle.

The problem is solved by the subject matter of the independent claims. Further embodiments and advantages of the present invention are incorporated in the dependent claims and the description.

Technical terms are used in a common sense. If a specific meaning is conveyed to certain claims, definition of terms will be given in the following in the context of which the terms are used.

A first aspect of the invention is a sensor device for calculating a motion of a camera in a vehicle. The sensor device is defined in claim 1.

The advantage of this embodiment can be that the sensor device estimates motion with scale without requiring features detected on the ground. The estimation can be based on two things: the displacement of the points in the image and the displacement of the projected lines in the ground calibration plane. Therefore, the sensor device may work in a nonplanar ground for example in off-road scenarios. Furthermore, with the help of the improved sensor device, dynamic motion can be estimated and objects can be tracked.

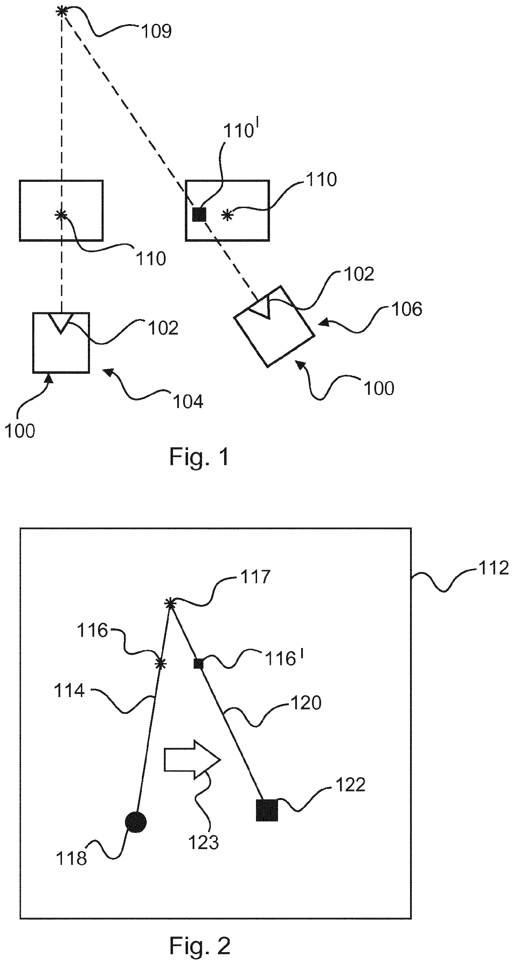

In other words, with the help of a camera in a vehicle the scale of the motion of the camera and the vehicle can be calculated. The scale of the motion of the camera can be described as the transferring of a movement in an image in pixel into the motion of the camera in meter. Or in other words, the scale correlates a displacement of a point between a first and second image into a real distance, for example a motion of the camera or the car. Therefore, a first and a second image are generated in which each point is identified. The displacement of the point, in particular the coordinates of the point in the first image and the coordinates of the point in the second image, are then used to calculate the motion of the camera and/or the motion of the vehicle based on epipolar geometry. Until this point, the motion is without scale so that a scale needs to be calculated to be able to quantify the motion. Therefore, the point in the first image is projected in a ground calibration plane. In addition, the first position of the camera is also projected in the ground calibration plane. With the help of these two points, a first line is formed or calculated. Furthermore, the point in the second image is also projected into the ground calibration plane. The ground calibration plane can be a ground calibration plane, a virtual plane or any plane, which is not really the ground. Additionally, the position of the camera when capturing the second image is also projected in the ground calibration plane. Furthermore, a second line is calculated which is formed between the projected point in the second image and in position of the camera when capturing the second image. Accordingly, a scale can be calculated based on the first and the second line as well as the calculated motion of the camera without scale. This is achieved by comparing a shift between the first and the second line in the ground calibration plane. By assessing the shift between the first and second line, the motion of the camera can be quantified since a scale can be computed out of the shift between the first and second line in the ground calibration plane. This embodiment will be explained in further detail in the Fig. 1 and the corresponding figure description.

According to an embodiment, the motion of the camera comprises a rotational component and a translational component. The calculation of the scale of the motion is applied only on the translation component of the motion of the camera.

In other words, the motion of the camera comprises a rotational and a translation part, for example a longitudinal and transverse movement. The sensor device is configured such that the sensor device can isolate a rotational component of the motion of the camera from the translational component of the motion of the camera. The sensor device is then configured to apply the scale of the motion only on the translational part of the motion. For example, by knowing the motion of the camera without scale and the shift of the lines, the scale of the motion of the camera can be directly computed. This may be expressed by: scale = (line2 - linel*rotation)/(translation without scale)

According to an embodiment, the camera is positioned and orientated within a vehicle, such that the camera is positioned and orientated along a predetermined position and orientation. Furthermore, the selection of the point in the first image and the identification of said point in the second image is further based on the predetermined position and orientation of the camera.

This embodiment may have the advantage that by implementing the predetermined position and orientation of the camera, the system is more stable and more reliable.

In other words, the sensor device and the camera are positioned in the vehicle by a predetermined position and orientation. For example, the camera can be fixedly attached to the bodywork of the vehicle. Thereby, the predetermined position and orientation of the camera is known to the sensor device such that the predetermined position and orientation can be used to calculate the motion of the camera and the scale of the motion of the camera. Furthermore, the predetermined position and orientation of the camera can be orientated along a coordinate system which comprises three axes, for example x, y and z, wherein the predetermined position and orientation of the camera is described in relation to the three-dimensional coordinate system. The origin of the three-dimensional coordinate system can be for example the center of gravity of the vehicle or the geometrical center of the vehicle or any other origin, which fits for this purpose.

According to an embodiment, the sensor device is further configured for calibrating the ground calibration plane based on the predetermined position and orientation of the camera within the vehicle. Furthermore, the sensor device is configured for receiving a signal of a distance and/or an inclination in between the camera and the ground, on which the vehicle stands on, during the calibrating of the ground calibration plane.

In other words, the ground calibration plane can be calibrated for example within a factory where the inclination between the camera and the ground on which the vehicle stands is known. For example, the ground is levelled such that the camera can calibrate the ground calibration plane based on the predetermined position and orientation of the camera within the vehicle and the input that the car is on a plane surface. In addition, also the distance between the camera and ground is comprised by the signal, for example a user input or a signal generated with a measuring device, such that the process of calibrating is more reliable and stable.

According to an embodiment, the calculation unit is further configured for computing the motion of the vehicle based on the calculated motion of the camera without scale, the calculated scale of the motion of the camera and the predetermined orientation and position of the camera within the vehicle.

In other words, the motion or movement of a vehicle can be calculated or computed only based on images, which are generated by the camera and the predetermined orientation and position of the camera within the vehicle. Based on the captured images, the camera of the motion without scale can be calculated as described herein and based on the motion of the camera without scale and the shift of the first to the second line within the ground calibration plane the scale of the motion can be determined. In addition to that, also the translational and rotational component can be isolated from each other so that the motion of the vehicle can be assessed even more precisely.

According to an embodiment, the calculation unit is further configured for estimating dynamic motion based on the motion of the camera without scale.

This embodiment can have the advantage that all aspects of the dynamic motion, for example a braking, an accelerating, and/or a steering motion of a vehicle can be estimated with the help of the calculated motion of the camera and the corresponding scale of the motion.

In other words, all aspects of driving situations of a vehicle can be estimated based on the motion of the camera in combination with the scale of the motion of the camera. Therefore, acceleration braking and/or steering of a vehicle, which is preferably highly automated, can be achieved by the sensor device.

According to an embodiment, the calculation unit is further configured for detecting an object based on the motion of the camera without scale and the scale of the motion of the camera.

This embodiment can have the advantage that a distance between the vehicle and the detected object can be estimated based on the calculated scale of the motion of the camera. Accordingly, the distance between the camera and the object can be used to implement an acceleration, a braking and/or a steering actuation of the vehicle so that safe driving is provided.

In other words, within the first and the second image, an object can be detected. Based on the calculated scale of the motion of the camera, a distance between the object and the camera can be calculated. Based on this information it can be decided whether an acceleration braking or steering action can be useful for the safe driving of the vehicle.

According to an embodiment, the sensor device is configured for measuring a time period between the capturing of the first image and the capturing of the second image.

This embodiment can have the advantage that by the input of the scale of the motion of the camera and the corresponding time period between the capturing of the first image and the capturing of the second image the speed of the motion of the camera can be assessed.

In other words, the first image and the second image are each provided with a timestamp wherein based on the difference between the two timestamps, a time period can be calculated. By calculating the motion of the camera and calculating the scale of the motion of the camera, the time period can be set into relation such that a speed of the motion of the camera can be calculated for example a speed measured in m/s.

According to an embodiment, the calculation unit is configured for selecting a plurality of points in the first image and identifying said plurality of points in the second image. In addition, the calculation unit is configured for calculating a displacement of the plurality of points based on a shift between the plurality of points in the first image and said plurality of points in the second image. Furthermore, the calculation unit is configured for calculating the motion of the camera without scale based on the displacement of the plurality of points. Additionally, the calculation unit is configured for correlating in the ground calibration plane the plurality of points in the first image to the first position of the camera and correlating in the ground calibration plane said plurality of points in the second image to the second position of the camera. Furthermore, the calculation unit is configured for calculating a first plurality of lines in the ground calibration plane between the plurality of points in the first image and the first position of the camera and calculating a second plurality of lines between said plurality of points in the second image and the second position of the camera. Furthermore, the calculation unit is configured for calculating the scale of the motion based on a shift of the first plurality of lines to the second plurality of lines in the ground calibration plane and based on the calculated motion of the camera without scale.

This embodiment can have the advantage that based on the plurality of first and second lines, the calculation of the scale of the motion can be further improved by increasing the reliability and decreasing number of measuring errors.

In other words, the stability of the calculating of the scale of the motion is improved by identifying a plurality of points in the first and in the second image and calculating the displacement of the plurality of points based on the shift between the plurality of points in the first image and said plurality of points in the second image. The displacement of the plurality of points can also be averaged over every of the plurality of points or only sections of the plurality of points. Based on the displacement of the plurality of points, the motion of the camera without scale can be calculated. Furthermore, the position of the camera when capturing the first image is correlated into the ground calibration plane. In addition to that, the plurality of points within the first image are then projected or correlated into the ground calibration plane. Furthermore, the position of the camera when capturing the second image is correlated into the ground calibration plane. Furthermore, the plurality of points in the second image are then correlated into the ground calibration plane. When the correlating of all elements is successfully achieved, a first plurality of lines can be calculated or formed between the plurality of points in the first image and a first position of the camera. The lines are calculated or formed with the orientation of the ground calibration plane. In addition, a second plurality of lines is calculated or formed between the plurality of points in the second image and the position of the camera when capturing the second image. The second plurality of lines is also orientated within the ground calibration plane. From the point the first plurality of lines and the second plurality of lines are calculated in the ground calibration plane, a shift between the first plurality of lines to the second plurality of lines in the ground calibration plane can be calculated or estimated. The shift between the first plurality of lines and the second plurality of lines can then be combined with the calculated motion of the camera to calculate the scale of the motion.

According to an embodiment, the calculation unit is further configured for calculating the motion of the camera without scale by averaging the shift of the first plurality of image points to the second plurality of points and calculating the scale of the motion of the camera by averaging the shift of the first plurality of lines to the second plurality of lines.

This embodiment can have the advantage that the stability of the calculation of the scale of the motion is further improved.

For example, a stability of the calculation of the motion can be improved by averaging the shift and/or the displacement of the first plurality of points and/or the second plurality of points in order to calculate the motion of the camera without scale. Furthermore, the shift between each of the first plurality of lines to each of the second plurality of lines may comprise a deviation whereby the deviation can be reduced by averaging the shift of the first plurality of lines to the second plurality of lines. Therefore, single measuring errors of one pair, consisting of the first line and second line, within each set of the plurality of lines can be reduced.

According to an embodiment, the calculation unit is further configured for filtering the plurality of points in the first image, the plurality of points in the second image, the first plurality of lines and/or the second plurality of lines, thereby detecting an artefact in the calculation of the scale of the motion of the camera.

This embodiment can have the advantage to further increase a stability of the calculation of the scale of the motion since obvious artefacts and errors within the plurality of points in the first image, the plurality of points in the second image, the first plurality of lines and/or the second plurality of lines can be detected.

Alternatively or in addition, a first threshold value can be configured to determine which points are valid to average the displacement and to compute the camera motion without scale. All non-valid points can be used to detect artefacts and/or dynamic motion. Furthermore, only valid points can be used to compute the lines. Furthermore, a second threshold value can be configured to determine which lines are valid to average the scale of the motion of the camera. In addition, the non-valid points can be used to generate a further set of lines. The further set of lines can be used for artefact detection.

According to an embodiment, the calculated first line is a three-dimensional line. Furthermore, the calculated second line is a three-dimensional line. Furthermore, the calculation unit is further configured for projecting the first three-dimensional line and the second three-dimensional line on the ground calibration plane, thereby reducing one degree of freedom of the first and the second three-dimensional line. Furthermore, the calculation unit is further configured for calculating the scale of the motion of the camera based on the shift of the projected first three-dimensional line to the projected second three-dimensional line and the camera motion without scale. This embodiment can have the advantage that the precision of the calculation of the scale of the motion can be further improved by directly assessing the information contained within the first and second three-dimensional line.

In other words, a projection of a first three-dimensional line and the projection of a second three-dimensional line can be used to calculate the scale of the motion. Therefore, a first three-dimensional line and a second three-dimensional are projected onto the ground calibration plane and based on the shift from the first to the second three-dimensional line and based on the camera without scale the scale of the motion is computed.

According to a further aspect of the invention, a computer-implemented method is provided for calculating a motion of a camera in a vehicle, as defined in claim 13.

The advantage of that embodiment can be that the method proposes to project the features in the ground calibration plane and estimate motion scale. Thereby, the necessary components to estimate motion scale can be reduced and also interactions between the camera and the assessing of the motion with scale and other systems like wheel spin sensors are not required anymore. Furthermore, this method works in a nonplanar ground, for example in off-road scenarios.

In other words, with the help of the method, a first image can be generated or captured at a first position of the camera and accordingly, a second image can be generated or captured with the camera at a second position of the camera. In the first image as well as in the second image, a point can be identified and the coordinates of the point in the first and second image can be stored and compared with each other. Based on the change of the position of the point in the first image to the position of the point in the second image, a displacement of the at least one point can be calculated. Furthermore, at least 6 points can be identified in the first image and said at least 6 points can be identified in the second image. In addition, a displacement of the positions of the at least 6 points from the first to the second image can be used to calculate the motion of the camera without scale. With the help of the calculated displacement, the motion of the camera without scale can be calculated. Furthermore, the point in the first image and the position of the camera when capturing the first image can be correlated into the ground calibration plane. Accordingly, also the point in the second image and the camera at the position when capturing the second image can be correlated in the ground calibration plane as well. Furthermore, a first line can be formed in the ground calibration plane between the point in the first image and the position of the camera when capturing the first image. Correspondingly, the second line can be formed or generated which describes the distance between the point in the second image and the position of the camera when generating the second image in the ground calibration plane. In addition, the method can calculate a shift between the first line to the second line in the ground calibration plane, which can be used to calculate the scale of the camera in combination with the calculated motion of the camera.

A further aspect of the invention is a computer program element which, when executed on a processor unit, instructs the processor unit to perform the method as described herein.

In a further aspect of the invention, a vehicle comprises a sensor device, wherein the sensor device comprises a camera, wherein the sensor device is configured for calculating a motion without scale, wherein the sensor device is also configured for calculating the scale of the motion of the camera, as explained herein, and/or wherein the vehicle comprises a computer-readable memory device on which the computer program element as described herein is stored.

All disclosures as described herein in relation to any aspect of the invention applies equally to all other aspects of the invention.

In the following, examples and embodiments of the invention are described with reference to the figures.

### Brief description of the drawings

Fig. 1 shows schematically a sensor device according to an embodiment.
Fig. 2 shows schematically a sensor device according to an embodiment.
Fig. 3 shows schematically a sensor device according to an embodiment.
Fig. 4 shows schematically a sensor device according to an embodiment.
Fig. 5 shows a flow-chart illustrating the steps of the method according to an embodiment.
Fig. 6 shows a vehicle according to an embodiment.
Fig. 7 shows a flow-chart illustrating the steps of an embodiment.
Fig. 8 shows a sensor device according to an embodiment.

The reference signs used in the drawings, and their meanings, are listed in a summary form in the list of reference signs. In principle, identical parts are provided with the same reference signs in the figures.

### Detailed description of embodiments

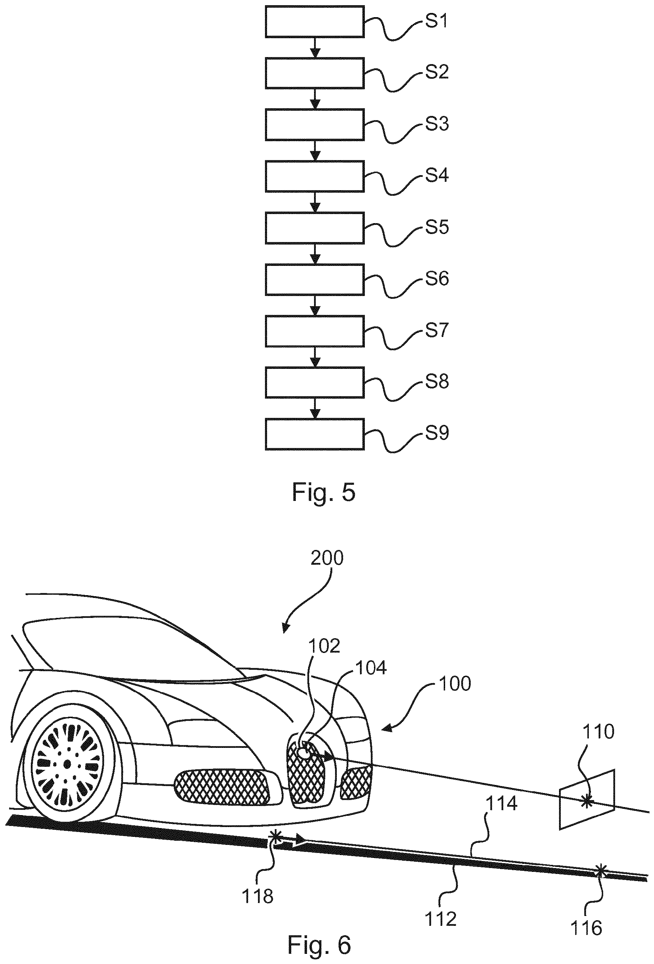

Fig. 1 shows a sensor device 100 for calculating a motion of a camera 102 in a vehicle 200, which is shown in Fig. 6. The sensor device 100 comprises the camera 102, which is configured for capturing the first image at a first position 104 of the camera 102 and a second image at a second position 106 of the camera 102.

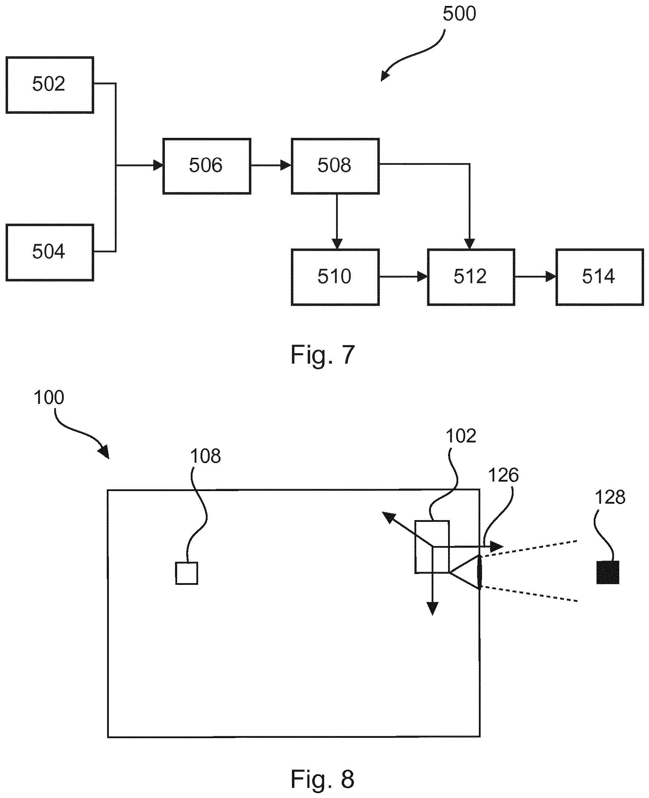

Furthermore, the sensor device 100 comprises a calculation unit 108, which is shown in Fig. 8, which is configured for selecting a point 110 in the first image and identifying said point 110' in the second image. The calculation unit 108 is further configured for calculating a displacement of the point based on a shift between the point 110 in the first image and said point 110' in the second image. In addition, the calculation unit 108, which is shown in Fig. 8, is configured for calculating the motion without scale of the camera 102 based on the displacement between the point 110 and 110'. Furthermore, the calculation unit 108 is configured for correlating in the ground calibration plane 112, which is show in Fig. 2, the point 110 in the first image to the first position 104 of the camera 102 and correlating in the ground calibration plane 112 said point 110' in the second image of the second position 106 of the camera 102. In addition, the calculation unit 108 is configured for calculating a first line 114 in the ground calibration plane 112 between said correlated point 116 in the first image and the correlated first position 118 of the camera 102, as shown in Fig. 2. Additionally, the calculation unit 108 is configured for calculating a second line 120 in the ground calibration plane 112 between the correlated point 116' in the second image and the correlated second position 122 of the camera 102 as shown in Fig. 2. Furthermore, the calculation unit is configured for calculating a scale of the motion of the camera 102 based on the shift between the first line 114 to the second line 120 in the ground calibration plane 112 and based on the calculated motion without scale of the camera 102.

The advantage of this embodiment may be that the sensor device 100 projects the features in the ground calibration plane 112 and estimate motion with scale. Furthermore, an advantage of this embodiment can be that the sensor device 100 works in a nonplanar ground, for example in off-road scenarios.

As can be seen in Fig. 1, the camera 102 is positioned at a first position 104. The camera 102 is configured for capturing a first image in which a point 110 is identified. The point 110 can represent a static point 109 in the environment of the sensor device 100. The first position 104 of the camera 102 when capturing the first image is then projected into the ground calibration plane 112 which results in the projected first position 118, which is shown in Fig. 2. Accordingly, the point 110 within the first image is projected into the ground calibration plane, which forms the projected point 116. Furthermore, a first line 114 is calculated between the projected first position 118 and the projected point 116 in the first image, as can be seen in Fig. 2. In addition to that, the camera 102 is shown at a second position 106. At the second position 106 the camera 102 captures a second image in which said point 110' is identified. Based on the position of the point 110, 110' in the first image and in the second image, the motion without scale of the camera 102 can be computed. The camera 102 is projected at the second position 106 into the ground calibration plane 112, which forms the projected second position 122, as shown in Fig. 2. Furthermore, the identified point 110' within the second image is projected into the ground calibration plane 112. Between the projected second position 122 and the projected identified point 116', a second line 120 is generated, as can be seen in Fig. 2. With the help of the shift 123 from the first line 114 to the second line 120 in the ground calibration plane 112, and the camera motion without scale, the scale of the motion of the camera 102 from the first position to the second position 106 can be computed, as shown in Fig. 2.

Fig. 2 shows the projected positions of the camera 118, 122 in the ground calibration plane 112. Between the projected positions 118, 122 and the projected points 116, 116' the first line 114 and the second line 120 are computed. Based on the shift 123 between the first line and the second line the scale of the motion of the camera can be computed.

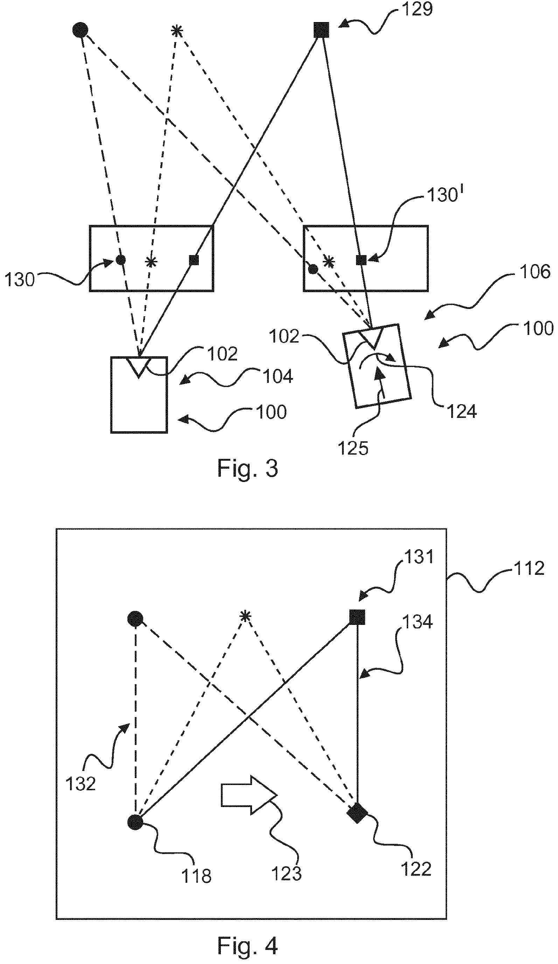

Fig. 3 shows an embodiment of the sensor device 100 in which a plurality of points 130 is identified in the first image taken by the camera 102 at the first position 104. In addition, said plurality of points 130' is identified in the second image captured by the camera 102 at the second position 106. Furthermore, a rotational component 124 of the motion of the camera and a translation component 125 of the motion can be computed.

Fig. 4 shows an embodiment in which the plurality of points 129 is projected into the ground calibration plane 112 as plurality of correlated points 131. Additionally, the position 118 of the camera 102 is projected into the ground calibration plane 112 when capturing the first image. Furthermore, the position 122 of the camera 102 is projected into the ground calibration plane 112 when capturing the second image. In addition, a first plurality of lines 132 is computed between the plurality of correlated points 129 from the first image and the projected position 118 of the camera 102, when capturing the first image. Furthermore, a second plurality of lines 134 is computed between the projected position 122 of the camera 102 when capturing the second image and said plurality of points 130 from the second image. Based on the shift 123 between the first plurality of lines 132 and the second plurality of lines 134 the scale of the motion of the camera 102 can be calculated.

Fig. 5 shows a flow-chart illustrating the steps of the method: Generating S1 a first image with the camera 102 at a first position 104 of the camera. Generating S2 a second image with the camera 102 at a second position 106 of the camera 102. Identifying S3 at least one point 110 in the first image and said point 110' in the second image. Calculating S4 a displacement of the at least one point 110,110' based on a displacement from the at least one point 110 in the first image to the said at least one point 110' in the second image. Calculating S5 a motion of the camera 102 based on the displacement of the at least one point 110,110'. Correlating S6 in a ground calibration plane 112 the at least one point 110 in the first image to the first position 104 of the camera 102 and the at least one point 110' in the second image to the second position 106 of the camera 102. Forming S7 at least one first line 114 in the ground calibration plane 112 between the at least one correlated point 116 in the first image and the correlated first position 118 of the camera 102. Forming S8 at least one second line 120 in the ground calibration plane 112 between the at least one correlated point 116' in the second image and the correlated second position 122 of the camera 102. Calculating S9 the scale of the motion of the camera 102 based on the at least one shift 123 of the first line 114 to the second line 120 in the ground calibration plane 112 and based on the calculated motion of the camera 102 without scale.

Fig. 6 shows an embodiment of the vehicle 200, which comprises the sensor device 100. The sensor device 100 comprises a camera 102. The camera 102 captures a first image at a first position 104. Within the image, a first point 110 can be identified. With the sensor device 100, in particular the calculation unit 108, the point identified in the first image can be projected onto the ground calibration plane 112, which results in the projected point 116. In addition, the position 104 of the camera 102 when capturing the first image can be projected into the ground calibration plane 112 which results into the projected first position 118. Between the first projected position 118 and in the projected point 116, a first line 114 can be calculated.

An example of the embodiment shown in Fig. 6 is described in more detail herein after. Considering a ray of light coming from a point 110 in the scene that passes through the image sensor and the camera 102. As shown in Fig. 5, the line between the point 110 and the camera 102 can be determined because the direction may be given by the image point 110 and camera's 102 position and orientation in vehicle coordinates.

Knowing the position of the camera 102 from calibration C = {CX,CY,CZ} the camera position can be projected on the ground calibration plane 112 as CG = {CX,CY,0}. The camera ray is R = {rX,rY,rZ} and is projected as rG={ rX, rY, 0 } . The first line 114 on the ground calibration plane 112 is defined as lG={b,-a,a*CY-b*CX} .

The first line 114 can be calculated using the optical center or the position and orientation of the camera 102 in vehicle coordinates when capturing the first image, in which the point 110 is identified, projected on the ground calibration plane 112 and the orientation given by the image point 110 projected on the ground calibration plane rG 112. This line can contain the point 116 in the ground calibration plane 112. The motion without scale can be estimated using epipolar geometry. The change in position of the point 110, 110' in the first image to the second image can be related with the motion: P = k2r2 and P'=RP+T = k1r1, wherein [R T] may be the motion of the camera and r1, r2 are the orientation given by the point 110, 110' in the first and second image.

In particular, the lines defined by these two rays containing the point 110, 110' and are defined as: 12.P=0 and 11.P'=0. Given the motion of the camera P'=RP+T, for any point 110, 110' non-null, the motion between the lines may be: 11 = 12.R + T. The scale can then be estimated using all the image points: 1G1=1G2.R+t.s, wherein the translation T = t. s for the unknown scale of the motion of the camera s may be performed.

A further embodiment shall be explained in view of the flow chart diagram illustrated in Fig. 7. The calculation of dynamic motion 500 may start with a first image 502 and a second image 504 captured at different time stamps. The optical flow 506 may be calculated using any appropriate method in combination with the first image 502 and the second image 504. Epipolar geometry 508 may be used to calculate the camera motion without scale [R|t]. The epipolar geometry methods can also determine the optical flow that is inlier to the motion. The direction from the optical flow is projected on the ground calibration plane 510, providing a list of line pairs. The motion of these lines is related with the camera motion li1 = li2 . R + T for any line i calculated using the point 110, 110' from the first 502 and second image 504. The scale 512 may be determined by solving the equation lGi1 = lGi2.R+t.s with i=1 :number of lines. This may result in an estimated motion with scale 514. This method may be valid for dynamic rigid objects moving orthogonally to the ground calibration plane 112. Using the optical flow 506 that is outlier the camera motion, dynamic motion up to scale can be calculated and provided in case each object has more than 8 points detected. The scale of the motion for each object may be determined in the same manner. The stability of the method may be improved by tracking the object over time, thereby filtering the scale of the motion of the camera.

Fig. 8 shows an embodiment of the sensor device 100. The sensor device 100 comprises a calculation unit 108 and a camera 102. The camera 102 is positioned within the sensor device according to a predetermined orientation and position 126. The camera 102 configured for detecting an object 128 and the calculation unit 108 is configured for performing the method as described herein before and after.

Where an indefinite or definite article is used when referring to a singular noun, e.g. "a", "an" or "the", this includes a plurality of that noun unless something else is specifically stated.

Furthermore, the terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein, as long as this operation is covered by the appended claims.

### Reference signs

- 100 -: sensor device
- 102 -: camera
- 104 -: first position
- 106 -: second position
- 108 -: calculation unit
- 109 -: static point
- 110 -: point in the first image
- 110' -: point in the second image
- 112 -: ground calibration plane
- 114 -: first line
- 116 -: correlated point in the first image
- 116' -: correlated point in the second image
- 117 -: correlated static point
- 118 -: correlated first position
- 120 -: second line
- 122 -: correlated second position
- 123 -: shift
- 124 -: rotational component
- 125 -: translational component
- 126 -: predetermined orientation and position
- 128 -: object
- 129 -: plurality of static points
- 130 -: plurality of points in the first image
- 130' -: plurality of points in the second image
- 131 -: plurality of correlated points
- 132 -: first plurality of lines
- 134 -: second plurality of lines
- 200 -: vehicle
- 500 -: dynamic motion
- 502 -: first image
- 504 -: second image
- 506 -: optical flow
- 508 -: epipolar geometry
- 510 -: lines in ground calibration plane
- 512 -: motion scale
- 514 -: motion estimation with scale
- S1 -: generating
- S2 -: generating
- S3 -: identifying
- S4 -: calculating
- S5 -: calculating
- S6 -: correlating
- S7 -: forming
- S8 -: forming
- S9 -: calculating

## Claims

1. A sensor device (100) for calculating a motion of a camera (102) in a vehicle (200), comprising:
the camera (102), which is configured for capturing a first image at a first position (104) of the camera (102) and a second image at a second position (106) of the camera (102),
a calculation unit (108), which is configured for:
- selecting a point (110) in the first image and identifying said point (110') in the second image,
- calculating a displacement of the point (110) based on a shift between the point (110) in the first image and said identified point (110') in the second image,
- calculating the motion of the camera without scale (102) based on the displacement of the point (110),
- projecting in a ground calibration plane (112) the point (110) in the first image and projecting in the ground calibration plane (112) said identified point (110') in the second image,
**characterized in that** the calculation unit is further configured for:
- calculating a first line (114) in the ground calibration plane (112) between said projected point (116) in the first image and the projected first position (118) of the camera (102) in the ground calibration plane,
- calculating a second line (120) in the ground calibration plane (112) between the projected identified point (116') in the second image and the projected second position (122) of the camera (102) in the ground calibration plane, and
- calculating a scale of the motion of the camera (102) based on a shift between the first line (114) to the second line (120) in the ground calibration plane (112) and based on the calculated motion of the camera without scale.

2. The sensor device according to claim 1,
wherein the motion of the camera comprises a rotational component (124) and a translational component (126),
wherein the calculation of the scale of the motion is applied only on the translational component (124) of the motion of the camera (102).

3. The sensor device according to any of the preceding claims,
wherein the camera (102) is positioned and orientated within the vehicle (200), such that the camera (102) is positioned and orientated along a predetermined position and orientation (126),
wherein the selection of the point (110) in the first image and the identification of said point (110') in the second image is further based on the predetermined position and orientation (126) of the camera (102).

4. The sensor device according to claim 3,
wherein the sensor device is further configured for:
- calibrating the ground calibration plane (112) based on the predetermined position and orientation (126) of the camera (102) within the vehicle (200), and
- receiving a signal of a distance and/or an inclination between the camera (102) and a ground, on which the vehicle stands on, during the calibrating of the ground calibration plane (112).

5. The sensor device according to any of the claims 3-4,
wherein the calculation unit (108) is further configured for:
- computing the motion of the vehicle (200) based on the calculated motion of the camera without scale(102), the calculated scale of the motion of the camera (102) and the predetermined orientation and position (126) of the camera (102) within the vehicle (200).

6. The sensor device according to any of the preceding claims,
wherein the calculation unit (108) is further configured for:
- detecting an object (128) based on the motion of the camera without scale (102) and the scale of the motion of the camera (102) .

7. The sensor device according to any of the preceding claims,
wherein the sensor device (100) is configured for:
- measuring a time period between the capturing of the first image and the capturing of the second image.

8. The sensor device according to any of the preceding claims,
wherein the calculation unit (108) is configured for:
- selecting a plurality of points (130) in the first image and identifying said plurality of points (130') in the second image,
- calculating a displacement of the plurality of points based on a shift between the plurality of points in the first image and said plurality of identified points in the second image,
- calculating the motion of the camera without scale (102) based on the displacement of the plurality of points,
- projecting in the ground calibration plane (112) the plurality of points (130) in the first image and projecting in the ground calibration plane (112) said plurality of identified points (130') in the second image
- calculating a first plurality of lines (132) in the ground calibration plane (112) between the plurality of points (130) in the first image and the projected first position (104) of the camera (102) in the ground calibration plane and calculating a second plurality of lines (134) between said plurality of projected identified points (130') in the second image and the projected second position (122) of the camera (102) in the ground calibration plane, and
- calculating the scale of the motion based on a shift of the first plurality of lines (132) to the second plurality of lines (134) in the ground calibration plane (112) and based on the calculated motion of the camera without scale.

9. The sensor device according to claim 8, wherein the calculation unit is configured for:
- selecting at least 8 points in the first image and identifying said 8 points (130') in the second image,
- calculating a displacement of at least 8 points based on a shift between the at least 8 points in the first image and said at least 8 points in the second image,
- calculating the motion of the camera without scale (102) based on the displacement of the plurality of points,
- estimating dynamic motion based on the motion of the camera without scale (102).

10. The sensor device according to any of claim 8 to 9,
wherein the calculation unit (108) is further configured for:
- calculating the motion of the camera without scale by averaging the shift of the first plurality of image points to the second plurality of points, and
- calculating the scale of the motion of the camera y averaging the shift of the first plurality of lines (132) to the second plurality of lines (134).

11. The sensor device according to any of claim 8-10,
wherein the calculation unit (108) is further configured for:
- filtering the plurality of points (130) in the first image, the plurality of points (130') in the second image, the first plurality of lines (132) and/or the second plurality of lines (134), thereby detecting an artefact in the calculation of the scale of the motion of the camera.

12. The sensor device according to any of the preceding claims,
wherein the calculated first line is a three dimensional line,
wherein the calculated second line is a three dimensional line,
wherein the calculation unit (108) is further configured for:
- projecting the first three dimensional line and the second three dimensional line on the ground calibration plane, thereby reducing one degree of freedom of the first and second three dimensional line, and
- calculating the scale of the motion of the camera based on the shift of the projected first three dimensional line to the projected second three dimensional line and the motion of the camera without scale.

13. A computer implemented method for calculating a motion of a camera in a vehicle, comprising the steps of:
- generating (S1) a first image with the camera at a first position of the camera,
- generating (S2) a second image with the camera at a second position of the camera,
- identifying (S3) at least one point in the first image and said point in the second image,
- calculating (S4) a displacement of the at least one point based on a shift from the at least one point in the first image to said at least one point in the second image,
- calculating (S5) a motion of the camera without scale based on the displacement of the at least one point,
- projecting (S6) in a ground calibration plane the at least one point in the first image and the at least one point in the second image,
**characterized in that** the method further comprises:
- forming (S7) at least one first line in the ground calibration plane between the at least one projected point in the first image and the projected first position of the camera in the ground calibration plane,
- forming (S8) at least one second line in the ground calibration plane between the at least one projected point in the second image and the projected second position of the camera in the ground calibration plane,
- calculating (S9) the scale of the motion of the camera based on a shift of the at least one first line to the at least one second line in the ground calibration plane and based on the calculated motion of the camera.

14. Computer program element, which when executed on a processor unit, instructs the processor unit to perform the method according to claim 13.

15. A vehicle comprising a sensor device,
wherein the sensor device comprises a camera,
wherein the sensor device is configured for calculating a scale of a motion of the camera in the vehicle according to any of claims 1-12, and/or
wherein the vehicle comprises a computer readable memory device on which the computer program element according to claim 14 is stored.

## Patentansprüche

1. Sensorvorrichtung (100) zum Berechnen einer Bewegung einer Kamera (102) in einem Fahrzeug (200), aufweisend:
die Kamera (102), die zum Aufnehmen eines ersten Bildes in einer ersten Position (104) der Kamera (102) und eines zweiten Bildes in einer zweiten Position (106) der Kamera (102) ausgebildet ist,
eine Berechnungseinheit (108), die ausgebildet ist zum:
- Auswählen eines Punkts (110) im ersten Bild und Identifizieren des Punkts (110') im zweiten Bild,
- Berechnen einer Verlagerung des Punkts (110) basierend auf einer Verschiebung zwischen dem Punkt (110) im ersten Bild und dem identifizierten (110') im zweiten Bild,
- Berechnen der Bewegung der Kamera ohne Skala (102) basierend auf der Verlagerung des Punkts (110),
- Projizieren des Punkts (110) im ersten Bild in einer Bodenkalibrierungsebene (112) und Projizieren des identifizierten Punkts (110') im zweiten Bild in der Bodenkalibrierungsebene (112),
**dadurch gekennzeichnet, dass** die Berechnungseinheit ferner ausgebildet ist zum:
- Berechnen einer ersten Linie (114) in der Bodenkalibrierungsebene (112) zwischen dem projizierten Punkt (116) im ersten Bild und der projizierten ersten Position (118) der Kamera (102) in der Bodenkalibrierungsebene,
- Berechnen einer zweiten Linie (120) in der Bodenkalibrierungsebene (112) zwischen dem projizierten identifizierten Punkt (116') im zweiten Bild und der projizierten zweiten Position (122) der Kamera (102) in der Bodenkalibrierungsebene, und
- Berechnen einer Skala der Bewegung der Kamera (102) basierend auf einer Verschiebung der ersten Linie (114) zur zweiten Linie (120) in der Bodenkalibrierungsebene (112) und basierend auf der berechneten Bewegung der Kamera ohne Skala.

2. Sensorvorrichtung nach Anspruch 1,
wobei die Bewegung der Kamera eine Rotationskomponente (124) und eine Translationskomponente (126) aufweist,
wobei die Berechnung der Skala der Bewegung nur auf die Translationskomponente (124) der Bewegung der Kamera (102) angewendet wird.

3. Sensorvorrichtung nach einem der vorhergehenden Ansprüche,
wobei die Kamera (102) innerhalb des Fahrzeugs (200) derart positioniert und ausgerichtet ist, dass die Kamera entlang einer vorbestimmten Position (126) positioniert und ausgerichtet ist,
wobei die Auswahl des Punkts (110) im ersten Bild und die Identifizierung des Punkts (110') im zweiten Bild ferner auf der vorbestimmten Position und Ausrichtung (126) der Kamera (102) basieren.

4. Sensorvorrichtung nach Anspruch 3,
wobei die Sensorvorrichtung ferner ausgebildet ist zum:
- Kalibrieren der Bodenkalibrierungsebene (112) basierend auf der vorbestimmten Position und Ausrichtung (126) der Kamera (102) innerhalb des Fahrzeugs (200), und
- Empfangen eines Signals eines Abstands und/oder einer Neigung zwischen der Kamera (102) und einem Boden, auf dem das Fahrzeug steht, während der Kalibrierung der Bodenkalibrierungsebene (112).

5. Sensorvorrichtung nach einem der Ansprüche 3 bis 4,
wobei die Berechnungseinheit (108) ferner ausgebildet ist zum:
- Berechnen der Bewegung des Fahrzeugs (200) basierend auf der berechneten Bewegung der Kamera ohne Skala (102), der berechneten Skala der Bewegung der Kamera (102) und der vorbestimmten Ausrichtung und Position (126) der Kamera (102) innerhalb des Fahrzeugs (200).

6. Sensorvorrichtung nach einem der vorhergehenden Ansprüche,
wobei die Berechnungseinheit (108) ferner ausgebildet ist zum:
- Erkennen eines Objekts (128) basierend auf der Bewegung der Kamera ohne Skala (102) und der Skala der Bewegung der Kamera (102).

7. Sensorvorrichtung nach einem der vorhergehenden Ansprüche,
wobei die Sensorvorrichtung (100) ferner ausgebildet ist zum:
- Messen eines Zeitraums zwischen dem Aufnehmen des ersten Bildes und dem Aufnehmen des zweiten Bildes.

8. Sensorvorrichtung nach einem der vorhergehenden Ansprüche,
wobei die Berechnungseinheit (108) ausgebildet ist zum:
- Auswählen einer Mehrzahl von Punkten (130) im ersten Bild und Identifizieren der Mehrzahl von Punkten (130') im zweiten Bild,
- Berechnen einer Verlagerung der Mehrzahl von Punkten basierend auf einer Verschiebung zwischen der Mehrzahl von Punkten im ersten Bild und der Mehrzahl von identifizierten Punkten im zweiten Bild,
- Berechnen der Bewegung der Kamera ohne Skala (102) basierend auf der Verlagerung der Mehrzahl von Punkten,
- Projizieren der Mehrzahl von Punkten (130) im ersten Bild in einer Bodenkalibrierungsebene (112) und Projizieren der Mehrzahl von identifizierten Punkten (130') im zweiten Bild in der Bodenkalibrierungsebene (112),
- Berechnen einer ersten Mehrzahl von Linien (132) in der Bodenkalibrierungsebene (112) zwischen der Mehrzahl von Punkten (130) im ersten Bild und der projizierten ersten Position (104) der Kamera (102) in der Bodenkalibrierungsebene und Berechnen einer zweiten Mehrzahl von Linien (120) zwischen der Mehrzahl von projizierten identifizierten Punkten (130') im zweiten Bild und der projizierten zweiten Position (122) der Kamera (102) in der Bodenkalibrierungsebene, und
- Berechnen der Skala der Bewegung basierend auf einer Verschiebung der ersten Mehrzahl von Linien (132) zur zweiten Mehrzahl von Linien (134) in der Bodenkalibrierungsebene (112) und basierend auf der berechneten Bewegung der Kamera ohne Skala.

9. Vorrichtung nach Anspruch 8, wobei die Berechnungseinheit ausgebildet ist zum:
- Auswählen von mindestens 8 Punkten im ersten Bild und Identifizieren der 8 Punkte (130') im zweiten Bild,
- Berechnen einer Verlagerung von mindestens 8 Punkten basierend auf einer Verschiebung zwischen den mindestens 8 Punkten im ersten Bild und den mindestens 8 Punkten im zweiten Bild,
- Berechnen der Bewegung der Kamera ohne Skala (102) basierend auf der Verlagerung der Mehrzahl von Punkten,
- Schätzen von dynamischer Bewegung basierend auf der Bewegung der Kamera ohne Skala (102).

10. Sensorvorrichtung nach einem der Ansprüche 8 bis 9,
wobei die Berechnungseinheit (108) ferner ausgebildet ist zum:
- Berechnen der Bewegung der Kamera ohne Skala durch Mitteln der Verschiebung der ersten Mehrzahl von Bildpunkten zur zweiten Mehrzahl von Bildpunkten, und
- Berechnen der Skala der Bewegung der Kamera durch Mitteln der Verschiebung der ersten Mehrzahl von Linien (132) zur zweiten Mehrzahl von Linien (134).

11. Sensorvorrichtung nach einem der Ansprüche 8 bis 10,
wobei die Berechnungseinheit (108) ferner ausgebildet ist zum:
- Filtern der Mehrzahl von Punkten (130) im ersten Bild, der Mehrzahl von Punkten (130') im zweiten Bild, der ersten Mehrzahl von Linien (132) und/oder zweiten Mehrzahl von Linien (134), um dadurch einen Artefakt in der Berechnung der Skala der Bewegung der Kamera zu erkennen.

12. Sensorvorrichtung nach einem der vorhergehenden Ansprüche,
wobei die berechnete erste Linie eine dreidimensionale Linie ist,
wobei die berechnete zweite Linie eine dreidimensionale Linie ist,
wobei die Berechnungseinheit (108) ferner ausgebildet ist zum:
- Projizieren der ersten dreidimensionalen Linie und der zweiten dreidimensionalen Linie auf der Bodenkalibrierungsebene, um dadurch einen Freiheitsgrad der ersten und der zweiten dreidimensionalen Linie zu reduzieren, und
- Berechnen der Skala der Bewegung der Kamera basierend auf der Verschiebung der projizierten ersten dreidimensionalen Linie zur projizierten zweiten dreidimensionalen Linie und der Bewegung der Kamera ohne Skala.

13. Computerimplementiertes Verfahren zur Berechnung einer Bewegung einer Kamera in einem Fahrzeug, aufweisend die folgenden Schritte:
- Erzeugen (S1) eines ersten Bildes mit der Kamera in einer ersten Position der Kamera,
- Erzeugen (S2) eines zweiten Bildes mit der Kamera in einer zweiten Position der Kamera,
- Identifizieren (S3) mindestens eines Punkts im ersten Bild und des Punkts im zweiten Bild,
- Berechnen (S4) einer Verlagerung des mindestens einen Punkts basierend auf einer Verschiebung von dem mindestens einen Punkt im ersten Bild zu dem mindestens einen Punkt im zweiten Bild,
- Berechnen (S5) einer Bewegung der Kamera ohne Skala basierend auf der Verlagerung des mindestens einen Punkts,
- Projizieren (S6) des mindestens einen Punkts im ersten Bild und des mindestens einen Punkts im zweiten Bild in einer Bodenkalibrierungsebene,
**dadurch gekennzeichnet, dass** das Verfahren ferner aufweist:
- Bilden (S7) mindestens einer ersten Linie in der Bodenkalibrierungsebene zwischen dem mindestens einen projizierten Punkt im ersten Bild und der projizierten ersten Position der Kamera in der Bodenkalibrierungsebene,
- Bilden (S8) mindestens einer zweiten Linie in der Bodenkalibrierungsebene zwischen dem mindestens einen projizierten Punkt im zweiten Bild und der projizierten zweiten Position der Kamera in der Bodenkalibrierungsebene,
- Berechnen (S9) der Skala der Bewegung der Kamera basierend auf einer Verschiebung der mindestens einen ersten Linie zu der mindestens einen zweiten Linie in der Bodenkalibrierungsebene und basierend auf der berechneten Bewegung der Kamera.

14. Computerprogrammelement, das bei Ausführung auf einer Prozessoreinheit die Prozessoreinheit zum Durchführen des Verfahrens nach Anspruch 13 anweist.

15. Fahrzeug, aufweisend eine Sensorvorrichtung,
wobei die Sensorvorrichtung eine Kamera aufweist,
wobei die Sensorvorrichtung zum Berechnen einer Skala einer Bewegung der Kamera im Fahrzeug nach einem der Ansprüche 1 bis 12 ausgebildet ist, und/oder
wobei das Fahrzeug eine computerlesbare Speichervorrichtung aufweist, auf der das Computerprogrammelement nach Anspruch 14 gespeichert ist.

## Revendications

1. Dispositif capteur (100)pour calculer un mouvement d'une caméra (102) dans un véhicule (200), comprenant :
la caméra (102), qui est configurée pour capturer une première image à une première position (104) de la caméra (102) et une seconde image à une seconde position (106) de la caméra (102),
une unité de calcul (108), configurée pour :
- sélectionner un point (110) dans la première image et identifier ledit point (110') dans la seconde image,
- calculer un déplacement du point (110) en fonction d'un décalage entre le point (110) dans la première image et ledit point identifié (110') dans la seconde image,
- calculer le mouvement de la caméra sans échelle (102) en fonction du déplacement du point (110),
- projeter dans un plan d'étalonnage de sol (112) le point (110) dans la première image et projeter dans le plan d'étalonnage de sol (112) ledit point identifié (110') dans la seconde image,
**caractérisé en ce que** l'unité de calcul est configurée en outre pour :
- calculer une première droite (114) dans le plan d'étalonnage de sol (112) entre ledit point projeté (116) dans la première image et la première position projetée (118) de la caméra (102) dans le plan d'étalonnage de sol,
- calculer une seconde droite (120) dans le plan d'étalonnage de sol (112) entre le point identifié projeté (116') dans la seconde image et la seconde position projetée (122) de la caméra (102), dans le plan d'étalonnage de sol, et
- calculer une échelle du mouvement de la caméra (102) en fonction d'un décalage entre la première droite (114) et la seconde droite (120) dans le plan d'étalonnage de sol (112) et en fonction du mouvement calculé de la caméra sans échelle.

2. Dispositif capteur selon la revendication 1,
dans lequel le mouvement de la caméra comprend une composante de rotation (124) et une composante de translation (126),
dans lequel le calcul de l'échelle du mouvement n'est appliqué qu'à la composante de translation (124) du mouvement de la caméra (102).

3. Dispositif capteur selon l'une quelconque des revendications précédentes,
dans lequel la caméra (102) est positionnée et orientée à l'intérieur du véhicule (200), de telle sorte que la caméra (102) soit positionnée et orientée le long d'une position et d'une orientation prédéterminées (126),
dans lequel la sélection du point (110) dans la première image et l'identification dudit point (110') dans la seconde image sont en outre fonction de la position et de l'orientation prédéterminées (126) de la caméra (102).

4. Dispositif capteur selon la revendication 3,
le dispositif capteur étant configuré en outre pour :
- étalonner le plan d'étalonnage de sol (112) en fonction de la position et de l'orientation prédéterminées (126) de la caméra (102) à l'intérieur du véhicule (200), et
- recevoir un signal d'une distance et/ou d'une inclinaison entre la caméra (102) et un sol, sur lequel se tient le véhicule, durant l'étalonnage du plan d'étalonnage de sol (112).

5. Dispositif de détection selon l'une quelconque des revendications 3 à 4,
dans lequel l'unité de calcul (108) est configurée en outre pour :
- calculer le mouvement du véhicule (200) en fonction du mouvement calculé de la caméra sans échelle (102), de l'échelle calculée du mouvement de la caméra (102) et de l'orientation et de la position prédéterminées (126) de la caméra (102) à l'intérieur du véhicule (200).

6. Dispositif capteur selon l'une quelconque des revendications précédentes,
dans lequel l'unité de calcul (108) est configurée en outre pour :
- détecter un objet (128) en fonction du mouvement de la caméra sans échelle (102) et de l'échelle du mouvement de la caméra (102 ).

7. Dispositif capteur selon l'une quelconque des revendications précédentes,
le dispositif capteur (100) étant configuré pour :
- mesurer une période de temps entre la capture de la première image et la capture de la seconde image.

8. Dispositif capteur selon l'une quelconque des revendications précédentes,
dans lequel l'unité de calcul (108) est configurée pour :
- sélectionner une pluralité de points (130) dans la première image et identifier ladite pluralité de points (130') dans la seconde image,
- calculer un déplacement de la pluralité de points en fonction d'un décalage entre la pluralité de points dans la première image et ladite pluralité de points identifiés dans la seconde image,
- calculer le mouvement de la caméra sans échelle (102) en fonction du déplacement de la pluralité de points,
- projeter dans le plan d'étalonnage de sol (112) la pluralité de points (130) dans la première image et projeter dans le plan d'étalonnage de sol (112) ladite pluralité de points identifiés (130') dans la seconde image,
- calculer une première pluralité de droites (132) dans le plan d'étalonnage de sol (112) entre la pluralité de points (130) dans la première image et la première position projetée (104) de la caméra (102) dans le plan d'étalonnage de sol et calculer une seconde pluralité de droites entre ladite pluralité de points identifiés projetés (130') dans la seconde image et la seconde position projetée (122) de la caméra dans le plan d'étalonnage de sol, et
- calculer l'échelle du mouvement en fonction d'un décalage de la première pluralité de droites (132) vers la seconde pluralité de droites (134) dans le plan d'étalonnage de sol (112) et en fonction du mouvement calculé de la caméra sans échelle.

9. Dispositif capteur selon la revendication 8, dans lequel l'unité de calcul est configurée pour :
- sélectionner au moins 8 points dans la première image et identifier lesdits 8 points (130') dans la seconde image,
- calculer un déplacement d'au moins 8 points en fonction d'un décalage entre les au moins 8 points dans la première image et lesdits au moins 8 points dans la seconde image,
- calculer le mouvement de la caméra sans échelle (102) en fonction du déplacement de la pluralité de points,
- estimer un du mouvement dynamique en fonction du mouvement de la caméra sans échelle (102).

10. Dispositif capteur selon l'une quelconque des revendications 8 à 9,
dans lequel l'unité de calcul (108) est configurée en outre pour :
- calculer le mouvement de la caméra sans échelle en faisant une moyenne du décalage de la première pluralité de points d'image vers la seconde pluralité de points, et
- calculer l'échelle du mouvement de la caméra en faisant une moyenne du décalage de la première pluralité de droites (132) vers la seconde pluralité de droites (134).

11. Dispositif capteur selon l'une quelconque des revendications 8 à 10,
dans lequel l'unité de calcul (108) est configurée en outre pour :
- filtrer la pluralité de points (130) dans la première image, la pluralité de points (130') dans la seconde image, la première pluralité de droites (132) et/ou la seconde pluralité de droites (134), détectant ainsi un artefact dans le calcul de l'échelle du mouvement de la caméra.

12. Dispositif capteur selon l'une quelconque des revendications précédentes,
dans lequel la première droite calculée est une droite tridimensionnelle,
dans lequel la seconde droite calculée est une droite tridimensionnelle,
dans lequel l'unité de calcul (108) est configurée en outre pour :
- projeter la première droite tridimensionnelle et la seconde droite tridimensionnelle sur le plan d'étalonnage du sol, réduisant ainsi un degré de liberté des première et seconde droites tridimensionnelles, et
- calculer l'échelle du mouvement de la caméra en fonction du décalage de la première droite tridimensionnelle projetée vers la seconde droite tridimensionnelle projetée et du mouvement de la caméra sans échelle.

13. Procédé mis en oeuvre par ordinateur pour calculer un mouvement d'une caméra dans un véhicule, comprenant les étapes suivantes :
- la génération (S1) d'une première image avec la caméra à une première position de la caméra,
- la génération (S2) d'une seconde image avec la caméra à une seconde position de la caméra,
- l'identification (S3) d'au moins un point de la première image et dudit point dans la seconde image,
- le calcul (S4) d'un déplacement de l'au moins un point en fonction d'un décalage de l'au moins un point dans la première image vers ledit au moins un point dans la seconde image,
- le calcul (S5) d'un mouvement de la caméra sans échelle en fonction du déplacement de l'au moins un point,
- la projection (S6) dans un plan d'étalonnage de sol de l'au moins un point dans la première image et de l'au moins un point dans la seconde image,
**caractérisé en ce que** le procédé comprend en outre :
- la formation (S7) d'au moins une première droite dans le plan d'étalonnage de sol entre l'au moins un point projeté dans la première image et la première position projetée de la caméra dans le plan d'étalonnage de sol,
- la formation (S8) d'au moins une seconde droite dans le plan d'étalonnage de sol entre l'au moins un point projeté dans la seconde image et la seconde position projetée de la caméra dans le plan d'étalonnage de sol,
- le calcul (S9) de l'échelle du mouvement de la caméra en fonction d'un décalage de l'au moins une première droite vers l'au moins une seconde droite dans le plan d'étalonnage de sol et en fonction du mouvement calculé de la caméra.

14. Elément de programme d'ordinateur qui, à son exécution sur une unité de processeur, ordonne à l'unité de processeur de réaliser le procédé selon la revendication 13.

15. Véhicule comprenant un dispositif capteur,
dans lequel le dispositif capteur comprend une caméra,
dans lequel le dispositif capteur est configuré pour calculer une échelle d'un mouvement de la caméra dans le véhicule selon l'une quelconque des revendications 1 à 12, et/ou
dans lequel le véhicule comprend un dispositif de mémoire lisible par ordinateur sur lequel est stocké l'élément de programme d'ordinateur selon la revendication 14.
